(19) Europäisches Patentamt
European Patent Office
Office européen des brevets

(11) Publication number: **0 080 855**
**B1**

(12) # EUROPEAN PATENT SPECIFICATION

(45) Date of publication of patent specification: **29.01.86**

(51) Int. Cl.$^4$: **E 21 B 43/22**

(21) Application number: **82306245.0**

(22) Date of filing: **24.11.82**

(54) **Compounds and compositions for oil recovery.**

(30) Priority: **28.11.81 GB 8136010**

(43) Date of publication of application:
**08.06.83 Bulletin 83/23**

(45) Publication of the grant of the patent:
**29.01.86 Bulletin 86/05**

(84) Designated Contracting States:
**DE FR GB**

(56) References cited:
**DE-B-1 206 877**
**US-A-3 079 337**
**US-A-3 219 656**
**US-A-3 358 758**
**US-A-3 431 976**
**US-A-3 721 295**
**US-A-4 248 304**

**TENSIDE DETERGENTS, vol. 15, no. 2, 1978, pages 72-74, Carl Hansen Verlag, München, DE. BOHUSLAVA HAVLINOVA et al.: "Synthesis and properties of surfactants based on carbohydrates. I. Synthesis of some O-dodecyl aldoses"**

(73) Proprietor: **The British Petroleum Company p.l.c.**
**Britannic House Moor Lane**
**London EC2Y 9BU (GB)**

(72) Inventor: **Hodgson, Philip Kenneth Gordon**
**The British Petroleum Company p.l.c.**
**Chertsey Road**
**Sunbury-on-Thames Middlesex, TW16 7LN (GB)**

(74) Representative: **MacLeod, Malcolm et al**
**c/o The British Petroleum Company plc Patents Division Chertsey Road**
**Sunbury-on-Thames Middlesex, TW16 7LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 080 855 B1

**Description**

The invention relates to surfactant compositions suitable for injection into oil bearing formations, to novel organic compounds suitable for use as surfactants and to a method for using the surfactant compositions in the recovery of crude oil.

The displacement of oil in a formation by the use of surfactant compositions is known and numerous surfactant compositions have been described for this purpose.

We have now discovered that certain alkylpolyalkyleneoxy monosaccharides are particularly effective for the displacement of crude oil.

Thus according to the present invention there is provided a method for recovering oil from a formation which method comprises the steps of injecting a composition comprising an aqueous medium having dispersed therein an alkylpolyalkyleneoxy monosaccharide or reduced monosaccharide of general formula

I $R—(O\ CH_2CH_2)_n—O—$ [monosaccharide]

or

II $R—(OCH_2CH_2)_n—OCH_2CH(OH)CH_2—O—$ [reduced monosaccharide]

wherein R is an alkyl group containing 8 to 24 carbon atoms and n is an integer from 1 to 20 inclusive into the formation via an injection well and recovering the oil from a production well spaced apart from the injection well.

Suitable monosaccharides includes galactose, glucose and mannose.

Suitable reduced monosaccharides include sorbitol, mannitol and dulcitol.

The compositions are preferably used in concentrations in the range 200 to 10,000 ppm.

The surfactant composition can be used in an enhanced oil recovery operation in which the surfactant composition is injected and then followed by a drive fluid such as water.

It may also be used to increase the injectivity of water injection wells.

The preparation of galactose and glucose derivatives corresponding to Formula I in which the symbol n is zero has been described by Havlinova et al in Tenside Detergents, 1978, *15,* 72. German patent specification 1206877 discloses the preparation of certain sorbitol derivatives corresponding to Formula II in which the symbol n is zero. These are said to be useful as wetting agents and detergents.

Neither reference describes compounds of Formulae I or II in which the symbol n is other than zero.

The compounds may be prepared by reacting the monosaccharide or reduced monosaccharide with the corresponding alkylpolyalkyleneoxy compound or by alkylating the corresponding polyalkyleneoxy monosaccharide or reduced monosaccharide.

The invention is illustrated by the following Examples.

Example 1

Preparation of 6-O-[3:6:9-trioxaheneicosyl]-D-galactose

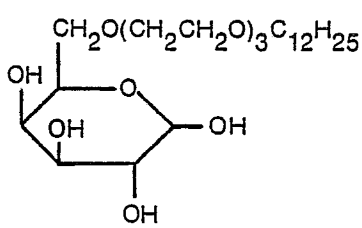

Sodium hydride (80% dispersion in oil, 2.4g dispersion, 0.08M) was added portionwise to a solution of 1,2:3,4-di-O-isopropylidene-alpha-D-galactopyranose (13g, 0.05M) in anhydrous xylene (250 ml) maintained under an atmosphere of nitrogen at 50°C. After 0.5 hours 1-chloro-3:6:9-trioxaheneicosane (16.85g, 0.05M) in anhydrous xylene (50 ml) was added slowly and the mixture was heated at 130°C for 6 hours. The mixture was allowed to cool to room temperature and methanol (5ml) was added followed by water (100ml). Solvent was evaporated and water (100ml) was added to the residue. The aqueous solution was extracted with chloroform (3 × 150ml) and the combined organic layers were washed with water (2 × 300 ml).

The organic solution was evaporated and the residue was dissolved in acetic acid (150ml). Water (30ml) was added and the mixture was heated at 100°C for 7 h. Evaporation of solvents gave the compound as a brown oil. Pure compound could be obtained, if required, by purification of the brown oil by silica gel column chromatography using dichloromethane:methanol 8:1 as eluent. Pure compound was analysed by TLC, $^{13}C$ NMR, MS and C,H analysis.

Example 2

Preparation of *2*-hydroxy-4:7:10:13:16-pentaoxatriacont-1-yl sorbitol

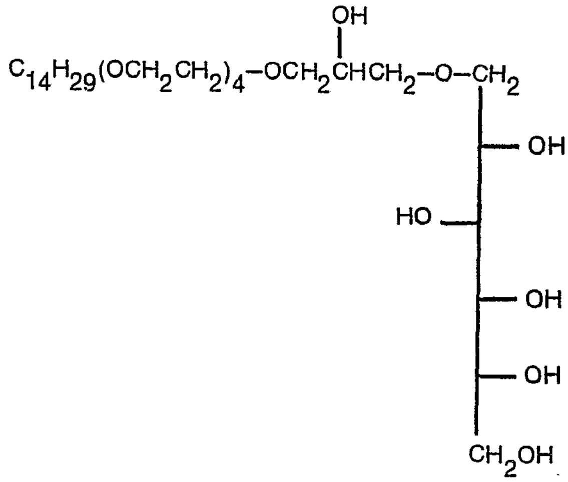

Sodium hydride (80% dispersion in oil, 3g dispersion, 0.1M) was added portionwise to a solution of 3:6:9:12-tetraoxahexacosan-1-ol (39g, 0.1M) in anhydrous toluene (150ml). After 1 hour at 70°C epichlorohydrin (11.1g, 0.12M) was added slowly and the mixture was heated at 110°C for 3 hours. The mixture was then allowed to cool and was filtered through glass paper. Evaporation of solvent gave a brown semi-solid which was slurried with anhydrous DMF (50ml). This slurry was added dropwise to sorbitol (18.2g, 0.1M) dissolved in anhydrous DMF (50ml) at 60°C. The mixture was heated at 130°C for 4 hours. The brown solution was allowed to cool and was filtered through celite. The solution was extracted with hexane (3 × 100ml) and then the DMF was removed by vacuum distillation. The brown gummy residue was digested with boiling isopropanol and unchanged solid sorbitol could be filtered off through celite. Evaporation of solvents from the filtrate gave an amber gum which was found by TLC-latroscan to contain 66% sorbitol ether. The pure compound could be obtained, if required, by purification of the amber gum by silica gel column chromatography using chloroform:methanol 6:1 as eluent. The pure compound was analysed by TLC and MS.

Properties of Compounds

The compounds prepared in Examples 1 and 2 and other related compounds prepared in a similar manner were evaluated by determining two properties:— (1) the capillary oil displacement time against Forties crude and (2) the dynamic interfacial tension, also against Forties crude.

In (1) a small sample of crude oil is placed in a capillary tube which is placed in a narrow tube so that the capillary remains upright at least to some extent. Both tubes are then placed in a bath of sea water containing 0.2% surfactant at a desired temperature. Oil is released from the capillary and floats to the surface. The time taken to release all the oil from the capillary is noted. The oil release time varies from seconds with a good surfactant to hours or not at all.

The dynamic interfacial tension is measured by a spinning drop interfacial tensiometer by the method disclosed by J Lucassen in the Journal of Colloidal and Interface Science, Vol 20, No 2, June 15 1979, *355.*

It is expressed in milliNewtons/metre after a specified time at a specified temperature. The lower the value, the more effective is the surfactant.

| Compound | Capillary Oil Displacement Time against Forties Crude 2000 ppm solution in sea water | Dynamic Interfacial Tension, against Forties Crude mN/m |
|---|---|---|
| Example 1 | 8 sec/25°C | 0.2/5 min/43°C |
| | 3 sec/85°C | 0.232/equilib./43°C |
| Example 2 | 5 min/25°C | 0.094/equilib./96°C |
| | 6 min/43°C | |
| Example 3 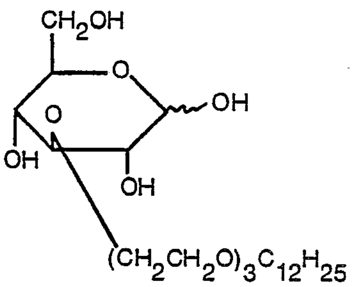 | 10 sec/25°C after 7 min delay | 0.242/2.5 min/42°C<br>0.288/equilib./43°C |
| Example 4 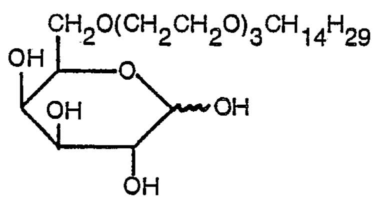 | 3 min/42°<br>35 sec/78°C | 0.065/equilib./70°C |

By way of comparison, similar measurements were carried out on an alkyl galactose having no alkylene oxide groups, i.e. with n = 0 in Formula 1.

| | | |
|---|---|---|
| 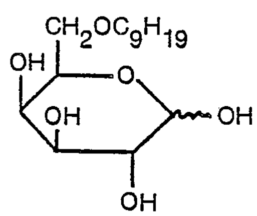 | 35 min/25°C<br>5 sec/80°C | 0.288/3 min/40°C<br>0.5/equilib./65°C |

Oil Displacement

A test of oil displacement was made in a packed column containing sand obtained from the Forties Field. The sand bed was flooded at 70°C with Forties Crude oil and then with the water again at 70°C so as to simulate an oil bearing formation at the residual level after a waterflood operation. The surfactant dispersed in sea water was then passed through the sand column at 70°C to displace residual oil.

Tests were carried out with the compounds of Examples 1 and 4 with the following results:
Example 1 compound: 11% oil displaced over 1.4 to 2.0 pore volumes
Example 4 compound: 37% oil displaced over 1.3 to 3.9 pore volumes
The concentration of surfactant in the sea water was 2000 ppm in each case.

**Claims**

1. A method for recovering oil from a formation comprising the step of injecting a composition containing an aqueous medium into the formation via an injection well and recovering the oil from a production well spaced apart from the injection well characterised by the fact that the aqueous medium has dispersed therein an alkylpolyalkyleneoxy monosaccharide or reduced monosaccharide of general formula:

I $$R{-}(O\ CH_2CH_2)_n{-}O{-}\ [\text{monosaccharide}]$$

or

II $$R{-}(OCH_2CH_2)_n{-}OCH_2\overset{\displaystyle OH}{\overset{|}{C}}HCH_2{-}O{-}\ [\text{reduced monosaccharide}]$$

wherein R is an alkyl group containing 8 to 24 carbon atoms and n is an integer from 1 to 20 inclusive.

2. A method according to claim 1 wherein the monosaccharide is galactose, glucose or mannose.

3. A method according to claim 1 wherein the reduced monosaccharide is sorbitol, mannitol or dulcitol.

**Patentansprüche**

1. Verfahren zur Ölgewinnung aus einer Formation mit dem Schritt des Einspritzens einer ein wäßriges Medium enthaltenden Zusammensetzung durch ein Einspritzbohrloch in die Formation und der Gewinnung des Öls aus einem in gewissem Abstand von dem Einspritzbohrloch befindlichen Förderbohrloch, dadurch gekennzeichnet, daß das wäßrige Medium darin dispergiert ein Alkylpolyalkylenoxy-monosaccharid oder reduziertes Alkylpolyalkyleneoxy-monosaccharid der allgemeinen Formel

I $$R{-}(O\ CH_2CH_2)_n{-}O{-}\ [\text{Monosaccharid}]$$

oder

II $$R{-}(OCH_2CH_2)_n{-}OCH_2\overset{\displaystyle OH}{\overset{|}{C}}HCH_2{-}O{-}\ [\text{reduziertes Monosaccharid}]$$

aufweist, worin R eine Alkyl-Gruppe mit 8 bis 24 Kohlenstoff-Atomen ist und n eine ganze Zahl von 1 bis 20 einschließlich ist.

2. Verfahren nach Anspruch 1, dadurch gekennzeichnet, daß des Monosaccharid Galactose, Glucose oder Mannose ist.

3. Verfahren nach Anspruch 1, dadurch gekennzeichnet, daß das reduzierte Monosaccharid Sorbit, Mannit oder Dulcit ist.

**Revendications**

1. Un procédé pour la récupération d'huile à partir d'une formation comprenant l'opération consistant à injecter une composition contenant un support aqueux dans la formation par l'intermédiaire d'un puits d'injection et à récupérer l'huile à partir d'un puits de production écarté du puits d'injection, caractérisé en ce que le support aqueux contient une dispersion d'alcoyl-polyalcoylène-oxy monosaccharide ou de monosaccharide réduit de formule générale:

I $$R{-}(O\ CH_2CH_2)_n{-}O{-}\ (\text{monosaccharide})$$

ou

II $$R{-}(OCH_2CH_2)_n{-}OCH_2\overset{\displaystyle OH}{\overset{|}{C}}HCH_2{-}O{-}\ (\text{monosaccharide réduit})$$

où R est un groupe alcoyle contenant de 8 à 24 atomes de carbone et n est un nombre entier compris entre 1 et 20 inclus.

2. Un procédé suivant la revendication 1, dans lequel le monosaccharide est du galactose, du glucose ou du mannose.

3. Un procédé selon la revendication 1, dans lequel le monosaccharide réduit est du sorbitol, du mannitol ou du dulcitol.